Europäisches Patentamt

European Patent Office

Office européen des brevets

(19)

(11) Veröffentlichungsnummer: **0 191 761**
**B1**

(12) **EUROPÄISCHE PATENTSCHRIFT**

(45) Veröffentlichungstag der Patentschrift:
19.11.87

(51) Int. Cl.⁴: **B 60 R 22/46**

(21) Anmeldenummer: **84903745.2**

(22) Anmeldetag: **12.10.84**

(86) Internationale Anmeldenummer:
**PCT/DE 84/00213**

(87) Internationale Veröffentlichungsnummer:
**WO 85/01707 (25.04.85** Gazette 85/10)

(54) VORRICHTUNG ZUR AUSNUTZUNG DER AUFPRALLENERGIE EINES FAHRZEUGES ZUM STRAFFEN EINES SICHERHEITSGURTES.

(30) Priorität: **13.10.83 DE 3337232**

(43) Veröffentlichungstag der Anmeldung:
**27.08.86 Patentblatt 86/35**

(45) Bekanntmachung des Hinweises auf die Patenterteilung:
**19.11.87 Patentblatt 87/47**

(84) Benannte Vertragsstaaten:
**DE FR GB SE**

(56) Entgegenhaltungen:
**DE - A - 1 655 597**
**DE - A - 2 159 265**
**DE - A - 2 246 077**
**DE - A - 3 111 045**
**FR - A - 1 012 718**
**FR - A - 1 594 234**
**FR - A - 2 219 867**
**FR - A - 2 237 452**
**FR - A - 2 241 968**
**FR - A - 2 289 367**
**FR - A - 2 324 321**
**FR - A - 2 370 601**
**US - A - 2 900 036**
**US - A - 3 423 124**
**US - A - 3 589 466**

(73) Patentinhaber: **AUDI AG, Postfach 220,
D-8070 Ingolstadt (DE)**

(72) Erfinder: **VOLLMER, Elmar, Goethering 16,
D-8071 Wettstetten (DE)**

(74) Vertreter: **Engelhardt, Harald, Audi AG Postfach 2 20,
D-8070 Ingolstadt (DE)**

ACTORUM AG

# Beschreibung

Die Erfindung betrifft ein Fahrzeug mit einem in seinem Frontbereich angeordneten Antriebsaggregat, einem Sicherheitsgurt für einen Fahrzeuginsassen und einer Vorrichtung, durch welche der Sicherheitsgurt bei einem Frontaufprall gestrafft wird, gemäss dem Oberbegriff des Anspruchs 1.

Ein gattungsgemässes Fahrzeug ist aus der FR-A-23 24 321 bekannt. Dieser Druckschrift ist eine Längsstrebe entnehmbar, an deren einem Ende ein Sicherheitsgurt befestigt ist und deren anderes Ende sich an der Trennwand zum Motorraum des Fahrzeuges abstützt. Bei einem Frontaufprall ab einer bestimmten Grössenordnung stösst das im Frontbereich des Fahrzeuges angeordnete Antriebsaggregat an diese Trennwand und verformt sie in Richtung Fahrgastraum. Dabei wird gleichzeitig die Längsstrebe nach hinten verschoben und dabei der Sicherheitsgurt gestrafft.

Aus der DE-A-1 6 55 597 ist eine Sicherheitseinrichtung bekannt, bei der an einem längsverschieblich geführten Stossfänger ein Seil befestigt ist, welches über Umlenkeinrichtungen zu einer die Lenksäule aufnehmenden Konsole geführt ist. Durch die besondere Gestaltung der Umlenkeinrichtungen wird erreicht, dass bei einer Längsverschiebung des Stossfängers über das Seil Teile der Umlenkeinrichtung verformt werden und darüber indirekt die Lenksäule mit dem Lenkrad vom Fahrer wegbewegt wird.

Der Erfindung liegt die Aufgabe zugrunde, ein gattungsgemässes Fahrzeug mit einer Vorrichtung zum Straffen des Sicherheitsgurtes bei einem Frontaufprall so weiterzubilden, dass die Vorrichtung auch bei schwierigen Einbauverhältnissen realisierbar und kostengünstig herstellbar ist.

Die Aufgabe wird durch die kennzeichnenden Merkmale des Anspruchs 1 gelöst.

Durch die Verwendung eines Seiles werden der Bauaufwand und damit die Kosten für die Vorrichtung wesentlich reduziert. Es wird also eine Voraussetzung geschaffen, durch welche der Einsatz einer derartigen Vorrichtung in Grosserien überhaupt erst möglich wird. Von besonderem Vorteil ist, dass ein Seil — im Gegensatz zu dem aus der FR-A-23 24 321 bekanntem Gestänge — sehr variabel verlegbar ist, so dass die erfindungsgemässe Vorrichtung selbst dann noch realisierbar ist, wenn schwierige Einbauverhältnisse vorliegen. Neben dem wesentlich geringeren Platzbedarf sind ausserdem kaum Änderungen an der Fahrzeugkarosserie notwendig. Das bekannte Gestänge, welches die Veschiebebewegung des Aggregats bei einem Aufprall auf den Sicherheitsgurt überträgt, ist nicht nur mechanisch sehr aufwendig und damit teuer; es erhöht auch in nicht unerheblichem Umfang das Fahrzeuggewicht.

Für die erforderlichen Umlenkungen des Seiles können Rollen oder auch nur Anlageflächen herangezogen werden. Diese Umlenkhilfen können eingespart werden, wenn gemäss einer vorteilhaften Weiterbildung der Erfindung das Seil von einer Hülle umgeben ist, deren Enden an ausserhalb der Knautschzone gelegenen Karosseriebauteilen befestigt sind.

Von Vorteil ist, wenn das Seil mit Mitteln zusammenwirkt, durch welche der übertragene Weg oder die übertragene Kraft begrenzt wird. Dies kann beispielsweise durch Schwachstellen oder durch eine Entkoppelung bei einer vorbestimmten Kraft bzw. Weg bewirkt werden. Im umgekehrten Fall ist es durch das Seil jedoch auch leicht möglich, eine Übersetzung zu schaffen, insbesondere, da ausreichend Kraft zur Verfügung steht. Somit ist es möglich, bereits bei einem kurzen Verschiebeweg des Aggregats bei einem Aufprall einen vergrösserten Weg zum Straffen des Sicherheitsgurtes zur Verfügung zu stellen.

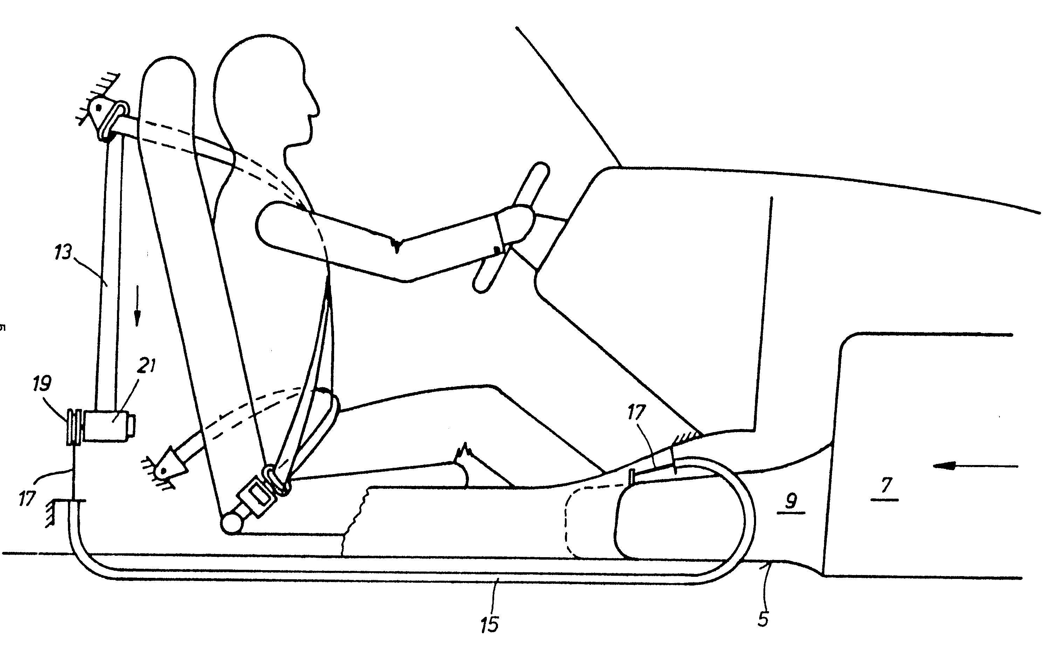

Ein Ausführungsbeispiel der Erfindung ist in der Zeichnung dargestellt. In ihr ist schematisch der vordere Innenraum eines Personenkraftwagens wiedergegeben. Der Bug des Personenkraftwagens nimmt ein Antriebsaggregat 5 auf, welches sich aus einem Motor 7 und einem Getriebe 9 zusammensetzt.

Im Falle seines Frontaufpralls wird der vor dem Antriebsaggregat 5 angeordnete Karosseriebereich (in der Zeichnung nicht dargestellt) verformt. Ab einer bestimmten Grössenordnung steht dann das relativ steife Antriebsaggregat 5 mittelbar am Hindernis an. Die übrige Karosserie bewegt sich — abhängig von der Aufprallgeschwindigkeit — weiter, wird also über das Antriebsaggregat 5 geschoben. Dieses Verhalten hat eine Relativbewegung (gestrichelt angedeutet) zwischen dem Antriebsaggregat 5 und der übrigen Karosserie zur Folge.

Diese Relativbewegung wird ausgenutzt, um einen Sicherheitsgurt 13 für einen Fahrzeuginsassen zu straffen. Zu diesem Zweck ist ein Bowdenzug 15 vorgesehen, dessen Enden an der Fahrzeugkarosserie befestigt sind. Ein vorstehendes Ende eines vom Bowdenzug 15 umschlossenen Seiles 17 ist am Getriebe 9 befestigt; das andere Ende teilweise auf eine Seilscheibe 19 aufgewickelt. Die Seilscheibe 19 ist unmittelbar auf der Wickelwelle einer Aufwickelvorrichtung 21 für den Sicherheitsgurt 13 aufgebracht.

Durch die Art der Anlenkung des Seiles 17 wird bewirkt, dass bei einem Frontaufprall das Seil 17 von der Seilscheibe 19 in Gurtaufrollrichtung abgezogen wird, wodurch vorhandene Gurtlose beseitigt werden.

# Patentansprüche

1. Fahrzeug mit einem in seinem Frontbereich angeordnetem Antriebsaggregat (5) einem Sicherheitsgurt (13) für einen Fahrzeuginsassen und einer Vorrichtung, durch welche der Sicherheitsgurt (13) bei einem Frontaufprall gestrafft wird, wobei die Vorrichtung die sich beim Frontaufprall ab einer bestimmten Grössenordnung ergebende Verkleinerung des Abstandes zwischen dem Antriebsaggregat (5) und einem sich nach hinten anschliessenden, ausserhalb der Knautschzone gelegenen Karosseriebauteil zur Straffung des Sicherheitsgurtes ausnutzt, dadurch gekennzeichnet, dass die Vorrichtung ein Seil (17) umfasst, welches unter Zwischenschaltung einer Umlenkeinrichtung mit seinem einen Ende am Antriebsaggregat (5) und mit seinem anderen Ende in Gurtaufrollrichtung an einer Seilscheibe (19) befestigt ist, welche mit einer Aufwickelvorrichtung (21) für den Sicherheitsgurt (13) in Wirkverbindung steht.

2. Vorrichtung nach Anspruch 1, dadurch gekennzeichnet, dass das Seil (17) von einer Hülle (15) umgeben ist, deren Enden an ausserhalb der Knautschzone gelegenen Karosseriebauteilen befestigt sind.

3. Fahrzeug nach Anspruch 1 oder 2, dadurch gekennzeichnet, dass das Seil (17) mit einer den Weg oder die Kraft steuernden Begrenzung versehen ist.

## Claims

1. Vehicle with a drive unit (5) arranged in its front region, a safety belt (13) for an occupant of the vehicle, and a device whereby the safety belt (13) is tightened in the event of a frontal collision, the device making use, for tightening the safety belt, of the reduction which results in the case of a frontal collision, from a specific order of magnitude onwards, in the spacing between the drive unit (5) and a body part which is in a rearwardly adjacent position and which is situated outside of the crumple zone, characterised in that the device comprises a cable (17) which, with interposition of a deflecting element, is secured at one end to the drive unit (5) and with its other end in the belt winding direction to a cable pulley (19) which is operatively connected to a reeling device (21) for the safety belt (13).

2. Device according to claim 1, characterised in that the cable (17) is surrounded by a sheath (15) the ends of which are secured to vehicle body parts which are situated outside of the crumple zone.

3. Vehicle according to claim 1 or 2, characterised in that the cable (17) is provided with a limiting means controlling the travel or the force.

## Revendications

1. Véhicule automobile, comportant un ensemble moteur (5) disposé dans sa région avant, une ceinture de sécurité (13) pour un passager du véhicule et un dispositif par lequel la ceinture de sécurité (13) est tendue en cas de collision frontale, dispositif qui utilise, pour tendre la ceinture de sécurité, la diminution de la distance se produisant en cas de collision frontale à partir d'un certain ordre de grandeur entre l'ensemble moteur (5) et une partie de la carrosserie qui fait suite à celui-ci vers l'arrière et qui est située en dehors de la zone déformable, caractérisé en ce que le dispositif comprend un câble (17) qui, avec interposition d'un dispositif de renvoi, est fixé par l'une de ses extrémités à l'ensemble moteur (5) et, par son autre extrémité, dans le sens de l'enroulement de la ceinture, à une poulie à câble (19) qui est solidaire d'un dispositif enrouleur (21) pour la ceinture de sécurité (13).

2. Dispositif selon la revendication 1, caractérisé en ce que le câble (17) est entouré par un gaine (15) dont les extrémités sont fixées à des éléments de la carrosserie situés en dehors de la zone déformable.

3. Véhicule automobile selon la revendication 1 ou 2, caractérisé en ce que le câble (17) est muni de moyens qui limitent la course ou la force transmise.

0 191 761